**Europäisches Patentamt**

**European Patent Office**

**Office européen des brevets**

(19)

(11) **EP 1 394 108 A1**

(12) **EUROPEAN PATENT APPLICATION**

| | |
|---|---|
| (43) Date of publication:<br>**03.03.2004 Bulletin 2004/10** | (51) Int Cl.[7]: **C01B 25/10** |

(21) Application number: **02445101.5**

(22) Date of filing: **19.08.2002**

| | |
|---|---|
| (84) Designated Contracting States:<br>**AT BE BG CH CY CZ DE DK EE ES FI FR GB GR<br>IE IT LI LU MC NL PT SE SK TR**<br>Designated Extension States:<br>**AL LT LV MK RO SI**<br><br>(71) Applicant: **Lithdyne LLC**<br>**Anaheim, CA 92806 (US)** | (72) Inventors:<br>• **Smith, W. Novis**<br>**Philadelphia, PA 19147 (US)**<br>• **McCloskey, Joel**<br>**Philadelphia, PA 19147 (US)**<br><br>(74) Representative: **Karlsson, Leif Karl Gunnar**<br>**Groth & Co.KB**<br>**P.O. Box 6107**<br>**102 32 Stockholm (SE)** |

(54) **Preparation of hexafluorophosphoric acid**

(57)     The present invention provides a process for preparing hexafluorophosphoric acid complexed with about 1 to 3.3 molecules of water which are stable at temperatures below 20°C and the compositions prepared thereby.

**EP 1 394 108 A1**

## Description

Field of the Invention

The present invention relates to the preparation of concentrated hexafluorophosphoric acid ($HPF_6$) complex solutions containing a minimum amount of water.

Background of the Invention

Known processes for the production of hexafluorophosphoric acid include:

$$1. \ H_3PO_4 + 6 \ HF \dashrightarrow HPF_6 + 4 \ H_2O$$

$$2. \ P_2O_5 + 12 \ HF \dashrightarrow 2HPF_6 + 5 \ H_2O$$

$$3. \ H_3PO_4 + 3 \ CaF_2 + 3H_2SO_4 \dashrightarrow HPF_6 \cdot 4H_2O + 3CaSO_4$$

The preparation of hexafluorophosphoric acid is usually accomplished by the addition of anhydrous HF to phosphoric acid or phosphorus pentoxide. The preparation using pure phosphorus pentoxide is difficult since it is a dry air sensitive powder and therefore some liquid phase is usually added to facilitate blending and reaction with the HF. This results in a $H_2O/ \ HPF_6$ ratio of about 3-4, never achieving the theoretical 2.5 ratio of water to $HPF_6$ when using $P_2O_5$.

U.S. Pat. No. 3,634,034 to Nickerson et al, which relates to process 3, produces along with phosphorus pentafluoride, $HPF_6$ and calcium sulfate. Separation problems and disposal of large amounts of calcium sulfate must be addressed with the process along with sulfate contamination.

$HPF_6$ is not stable at ambient conditions without a stabilizing coordination complex like water. In fact, very little or no $PF_5$ is absorbed when bubbled into anhydrous HF at $0°C$ showing that no complex is formed without water being present.

The presence of excess water is undesirable in solutions of hexafluorophosphoric acid because it promotes hydrolysis of the $PF_6$ anion to partially oxygenated species. In addition, it decreases the overall effectiveness and acidity of the acid and dilutes the concentration of the acid. It also adds extra shipping weight to cost. The pure hexafluorophosphoric acid has not been reported under ambient conditions (atmospheric pressure and room temperature).

Therefore, there exists a need to provide high purity $HPF_6$ in high concentrations that is stable at ambient conditions and can be prepared in a simple and economical procedure.

Summary Of The Invention

According to the present invention, there is provided a stable hexafluorophosphoric acid complexed with water having about 1.0 to 3.3 molecules of water to one hexafluorophosphoric acid molecule at $20°C$ and the process for its preparation.

According to one embodiment of the invention, there is prepared a hexafluorophosphoric acid composition compound having at least one molecule of water per hexafluorophosphoric acid molecule at temperatures below $50°C$, preferably 1.6 to 1.7 molecules of water to one hexafluorophosphoric acid molecule and below $20°C$.

According to another embodiment of the invention, there is further prepared a 1.7 mole ratio of $H_2O/HPF_6$ complex which is about 83% $HPF_6$ concentration from polyphosphoric acid.

It is, according to a further embodiment of the invention hexafluorophosphoric acid monohydrate is prepared therefore, an object of the present invention to provide an improved process for the preparation of a stable high purity hexafluorophosphoric acid complex in high yields.

Another related object of the present invention is to provide a process which is highly efficient and economical.

A further object of the present invention is to provide a process which produces a minimum amount of by-products.

Description Of The Preferred Embodiments

It has found that to stabilize $HPF_6$, adding only enough water to maintain its vapor pressure at about that of one atmosphere is essential. Preferably, the amount of water necessary is at least one molecule of water per hexafluorophosphoric acid molecule below 10°C and more preferably 1.6-1.7 molecules of water to one hexafluorophosphoric acid molecule at about 20°C. This solution can be kept in a Teflon bottle, polyethylene bottle or in a nickel alloy low-pressure cylinder.

Extra HF can also be added, but it does not contribute significantly to the stabilization of the $PF_6$ anion at these high concentrations. Since it is desirable to have as little water as possible and maximize the highest concentration of the hexafluorophosphoric acid, the preferred ratio is about 1.6-1.7. The highest $HPF_6$ concentrations available from other conventional routes can produce water/hexafluorophosphoric acid ratios only greater than 3.3 on a practical basis.

According to the present invention, one is able to produce these concentrated solutions of hexafluorophosphoric acid (ratios from 1 to 3.3) by adding $PF_5$ gas with cooling to various concentrations of HF in water (from 25% to 52% by weight HF) to produce the desired low ratios or amounts of water in the product. The phosphorous pentafluoride can contain phosphorus oxyfluoride ($POF_3$).

According to a further embodiment of the invention, one can produce these same high concentrations of hexafluorophosphoric acid (low water, 11-28% by weight) by adding $PF_5$ gas to already prepared solutions of hexafluorophosphoric acid which have water ratios higher than 3 and which also contain the calculated amount of excess HF to form the desired concentration of hexafluorophosphoric acid having low water (ratio of 1 to 3).

According to the present invention, a stable colorless crystalline 1:1 $HPF_6/H_2O$ complex forms below 10°C when $PF_5$ is bubbled into essentially 50% HF/water below 10°C, namely 0-5°C. This complex appears to melt with decomposition in the 10-12°C range. This crystalline complex also forms a slurry in solutions with the $H_2O/HF$ ratio from 1 to 2 below 10°C. These solid complexes decompose giving off $PF_5$ when the solutions are warmed to 20°C (room temperature). The equilibrium concentration in a closed bottle (fluorocarbon or polyolefin) at approximately one atmosphere is a mole ratio of $H_2O/HPF_6$ of 1.6-1.7 (about 83 ± 2% by weight $HPF_6$ and 17 ± 2% water).

According to the present invention, the process is as follows:

$$1)\ PF_5 + HF\ (1\ to\ 3.3\ moles\ water\ for\ each\ HF)\text{--}\rightarrow HPF_6 + 1.0\text{-}3.3$$

$H_2O$

The ratio of $H_2O/HPF_6$ is 1.0-3.3.

$$2)\ PF_5 + HPF_6/3.33\ H_2O + HF\ \text{--}\rightarrow HPF_6 + 1\text{-}3.3\ H_2O$$

The ratio of $H_2O/HPF_6$ is 1.0-3.3.

**Example 1**

The starting solutions of HF/water were prepared by diluting 52% HF($\underline{H_2O/HF}$ mol ratio of 1.0) with distilled water to achieve ratios of $H_2O/HF$ of 1.1 through 2.2. About 25-35 g. of the specific $\underline{H_2O/HF}$ mol ratio were placed into a weighed polyethylene bottle containing a magnetic stirrer under argon and the weight determined. The whole bottle was maintained at 0-5°C with cooling and stirring. $PF_5$ gas was slowly passed through the solution until $PF_5$ was no longer absorbed as noted by the fumes coming out of the vent tube.

The bottle was removed and weighed and the weight gain (amount of $PF_5$) absorbed noted. The bottle was allowed to warm up to 20°C and vented carefully over several hours while the gas pressure came to equilibrium. The remaining amount of absorbed $PF_5$ was noted. The $\underline{H_2O/HPF_6}$ mol ratio in these relatively stable solutions was noted and are given in Table 1. The resulting $H_2O/HPF_6$ mol ratio for these stable solutions is 1.6-1.7.

TABLE 1

| Comparative Stabilities of $HPF_6$ Containing Various Ratios of Water | | | | |
|---|---|---|---|---|
| Theorical (based on $H_2O$/HPFPresent) Actual | | | Actual | |
| Prep.# | Mol Ratio of $H_2O/HPF_6$ After $PF_5$ Addition | Mol Ratio Found | %Wt. $HPF_6$ Found | Comments |
| 1. | 0 (no water present-anhydrous HF) | 0 | 0 $HPF_6$ not stable at 0°C without water present | |

# EP 1 394 108 A1

TABLE 1   (continued)

| Comparative Stabilities of HPF$_6$ Containing Various Ratios of Water | | | | |
|---|---|---|---|---|
| Theorical (based on H$_2$O/HPFPresent) Actual | | | Actual | |
| Prep.# | Mol Ratio of H$_2$O/HPF$_6$ After PF$_5$ Addition | Mol Ratio Found | %Wt. HPF$_6$ Found | Comments |
| 2. | 1.0 | 1.0 | 89.0 | Stable < 10°C Solid |
| | Warmed to 21°C | 1.6 | 83.0 | Stable at 20°C Solution |
| 3. | 1.5        " | 1.7 | 82.5 | Stable at 20°C |
| 4. | 1.6        " | 1.6 | 83.3 | Stable at 20°C |
| 5. | 1.9        " | 1.6 | 82.9 | Stable at 20°C |
| 6. | 2.2        " | 1.5 | 84.5 | Stable at 20°C |
| 7. | 3.3 (From PPA as raw material) 1.6 83.1 Stable at 20°C 1.6 mol equiv. HF added | | | |
| Prior Art | | | | |
| 8. | >3.5 Commercial HPF$_6$ | >3.5 | 68 | Stable at 20°C |
| No additional PF$_5$ added | | | | |

Experiment 1 was performed with anhydrous HF without any water added. Only a trace amount of PF$_5$ dissolved in the anhydrous HF and was stabilized as HPF$_6$ even at 0°C. As shown by the results listed in Table 1, at least a H$_2$O/HPF$_6$ mol ratio of 1.0 (below 10°C) and preferably 1.6 at room temperature is needed to produce a stable HPF$_6$ solution (a vapor pressure less than about 200 mm Hg).

In experiment 6, a lower water HPF$_6$ solution (3.3 H$_2$O/HPF$_6$ mol ratio) prepared by the reaction of polyphosphoric acid (116% H$_3$PO$_4$) and anhydrous HF was upgraded to an even lower water level by adding 1.3 equivalents of HF and then about 1.3 mol equivalence of PF$_5$ added at 10°C to produce a HPF$_6$ acid solution with a H$_2$O/HPF$_6$ mol ratio of 2.0.

The same approach can be done with HPF$_6$ solutions of any concentration by adding the appropriate amount of HF and then saturating with PF$_5$ to bring the H$_2$O/HPF$_6$ mol ratio below 3.5 and preferably about 1.5 to 2.0 at 10-20°C. Thereby producing a minimum water content HPF$_6$ (73-89% HPF$_6$).

**Example 2**

Preparation of HPF$_6$ With PPA (116% Phosphoric Acid)

A charge of 1200 g of 116% polyphosphoric acid (equivalent to 14.06 mole phosphoric acid) was added to an 1-gal Inconel reactor stirred with a Teflon stirrer. (The PPA is warmed to about 60°C to gain flowability of the normally very viscous material for addition to the reactor.) The stirrer was adjusted to be just above the surface of the viscous PPA. The reactor is cooled to about 5-15°C with the stirrer just above the surface of the PPA. 1716 g. of anhydrous HF (about 2% excess) was slowly added to the stirred reaction mixture with sufficient cooling to maintain the temperature under 25°C, preferably under 20°C. The rate of reaction was steady throughout the addition with the mixture becoming quite fluid after about 10% addition. The whole addition using ice water as the coolant took about 1.5 hours. The reaction mixture was allowed to stir and come up to room temperature. The yield of hexafluorophosphoric acid is 100% with respect to contained fluoride and phosphorus. (Note that it is actually an equilibrium mixture and the effective concentration is about 62% to 65% by PF$_6$ anion precipitation. (Excess HF will bring the effective concentration up to the theoretical concentration.) The water content is 29% with a mole ratio of water to calculated hexafluorophosphoric acid of 3.3

The advantages of the present process over previous methods are many.

1) All of the phosphorus containing material can be added at once in the beginning.
    Normally the reaction of phosphorus pentoxide is too vigorous and it is a deliquescent difficult and hazardous powder to handle. Therefore it is usually added in steps after some of the HF has already been added to the reactor. This in itself is a hazardous procedure. Sometimes aqueous phosphoric acid is added initially to form a "heel" of liquid in order to add the phosphorus pentoxide solid powder to a liquid and maintain stirrability.

4

2) The PPA (116% equivalent to $H_3PO_4$) produces the minimum amount of water relative to hexafluorophosphoric acid of any material except phosphorus pentoxide which practically cannot be used by itself on commercial scale without the co-addition of aqueous phosphoric acid.

3) The PPA is also lower in cost than phosphoric acid or phosphorus pentoxide.

4) The reactor with PPA is lower in cost, faster, safer, and yields the highest concentration of hexafluorophosphoric acid with respect to contaminating water of all direct HF processes.

**Example 3**

A solution of 300g of 40.3% by weight hydrofluoric acid was prepared by adding 54 g water to 246 g of 49% hydrofluoric acid with cooling in a fluorocarbon polymer container (FEP). The solution was stirred and cooled with an ice bath to maintain the solution between 10-15°C while $PF_5$ gas was slowly added to the solution by means of a FEP tube which was below the surface of the stirred solution. The addition was stopped when 882 g of $PF_5$ gas had been added and the tubing removed and the container closed. The resulting solution weighed 1180 g and contained 83% by weight hexafluorophosphoric acid with a ratio of $H_2O/HPF_6$ of 1.65. At room temperature the bottle when opened had a slight vapor pressure and fumed.

**Example 4**

Preparation of low water hexafluorophosphoric acid using already prepared $HPF_6$. The 300 g of the hexafluorophosphoric acid from example 2 above was placed in a FEP bottle and stirred with cooling. Then 59 grams anhydrous HF were added while maintaining the solution at 10 to 15°C. To this solution was added 369 g $PF_5$ gas over 2 hours through a FEP tube while maintaining the solution at 10 to 15°C. The resulting solution weighed 125 g and contained 83% $HPF_6$ with a molar ratio of $H_2O/HPF_6$ of 1.65.

**Comparative Example 1**

A commercially available hexafluorophosphoric acid having a high ratio of water molecules to hexafluorophosphoric acid was placed in a vacuum at 4°C to lower the amount of water. The product decomposed.

$$HPF_6 \cdot (H_2O)_x \ VAC\text{-}\rightarrow 2HF + POF_3 + (x\text{-}1)\ H_2O$$

While in the foregoing specification we have set out specific procedures in considerable detail for the purpose of illustrating embodiments of the invention, it will be understood that such details may be varied widely by those skilled in the art without departing from the spirit of our invention.

**Claims**

1.  A process for producing a hexafluorophosphoric acid complex containing 1 to 3.3 molecules of water per molecule of hexafluorophosphoric acid by reacting phosphorus pentafluoride with an aqueous solution of hydrofluoric acid comprising 1 to 3.3 moles of water per mole of hydrofluoric acid.

2.  The process of claim 1 wherein said aqueous solution comprises about 25 to 95% by weight hydrofluoric acid.

3.  A process according to claim 1 wherein phosphorus pentafluoride is added to an aqueous solution comprising 50% by weight of hydrogen fluoride at about 0 to 5°C.

4.  The process of claim 1 further comprising adding phosphorous pentoxide.

5.  The process of claim 4 wherein phosphorus pentafluoride is added to an aqueous solution of about 20 to 76% hexafluorophosphoric acid and an equivalent molar amount of hydrogen fluoride to the phosphorus pentafluoride and a composition comprising 70 to 89% by weight of hexafluorophosphoric acid is formed.

6.  The process of claim 5 wherein said phosphorus pentafluoride contains phosphorus oxyfluoride.

7.  A process for preparing a stable hexafluorophosphoric acid complex having 2.6 to 3.5 molecules of water per molecule of hexafluorophosphoric acid comprising adding anhydrous hydrofluoric acid to an aqueous solution of polyphosphoric acid which comprises about 72 to 95 percent by weight of phosphorus pentoxide at a temperature not greater than 50°C.

8. A composition prepared by the process of claim 1.

9. A composition prepared by the process of claim 2.

10. A composition prepared by the process of claim 3.

11. A composition prepared by the process of claim 4.

12. A composition prepared by the process of claim 5.

13. A composition prepared by the process of claim 6.

14. Hexafluorophosphoric acid comprising 1 to 3.3 molecules of water.

15. Hexafluorophosphoric acid monohydrate.

16. A process for preparing a hexafluorophosphoric acid having a stabilizing water coordination complex which comprises reacting phosphorus pentafluoride with an aqueous solution of hydrofluoric acid at a temperature below 20°C.

**European Patent Office**

**EUROPEAN SEARCH REPORT**

Application Number

EP 02 44 5101

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 2 488 298 A (WILLY LANGE ET AL) 15 November 1949 (1949-11-15) * column 3, line 45-65 * * column 4, line 13-60 * * column 5, line 65 - column 6, line 5 * * example 9 * | 1,2,7-16 | C01B25/10 |
| X | US 2 488 299 A (WILLY LANGE ET AL) 15 November 1949 (1949-11-15) * column 2, line 7-50 * | 1,2,8-16 | |
| X | US 6 322 764 B1 (SMITH W NOVIS ET AL) 27 November 2001 (2001-11-27) * column 3, line 16-57 * * column 5, line 20-24 * * example 1 * | 7 | |
| X | US 3 875 292 A (NICKERSON JOHN D ET AL) 1 April 1975 (1975-04-01) * examples * | 8-14 | |
| X | GB 1 298 159 A (WIESBOECK R A) 29 November 1972 (1972-11-29) * the whole document * | 8-14 | TECHNICAL FIELDS SEARCHED (Int.Cl.7) C01B |

The present search report has been drawn up for all claims

| Place of search | Date of completion of the search | Examiner |
|---|---|---|
| MUNICH | 7 February 2003 | Besana, S |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**EP 1 394 108 A1**

## ANNEX TO THE EUROPEAN SEARCH REPORT
## ON EUROPEAN PATENT APPLICATION NO.

EP 02 44 5101

07-02-2003

| Patent document cited in search report | | | Publication date | Patent family member(s) | | Publication date |
|---|---|---|---|---|---|---|
| US 2488298 | A | | 15-11-1949 | NONE | | |
| US 2488299 | A | | 15-11-1949 | NONE | | |
| US 6322764 | B1 | | 15-11-2001 | US | 2001041158 A1 | 15-11-2001 |
| US 3875292 | A | | 01-04-1975 | DE | 2014917 A1 | 07-10-1971 |
| | | | | FR | 2086783 A5 | 31-12-1971 |
| | | | | BE | 748610 A1 | 07-10-1970 |
| | | | | GB | 1294899 A | 01-11-1972 |
| | | | | GB | 1294938 A | 01-11-1972 |
| | | | | US | 3769387 A | 30-10-1973 |
| GB 1298159 | A | | 29-11-1972 | DE | 2013858 A1 | 14-10-1971 |
| | | | | FR | 2082502 A5 | 10-12-1971 |

EPO FORM P0459